# FASCICULE DE BREVET EUROPEEN

(11) **EP 3 058 622 B1**
(45) Date de publication et mention de la délivrance du brevet: **02.01.2019**
(21) Numéro de dépôt: 14796162.7
(22) Date de dépôt: 09.09.2014
(51) Int. Cl.: H01R 13/11, H01R 12/57

(54) **CONNECTEUR FEMELLE A LYRE DE CONNEXION ET BOITIER COMPRENANT UN TEL CONNECTEUR**
BUCHSE MIT VERBINDUNGSBÜGEL UND EINHEIT MIT SOLCH EINER BUCHSE
FEMALE CONNECTOR WITH CONNECTING BOW AND UNIT COMPRISING SUCH A CONNECTOR

(30) Priorité: 14.10.2013 FR 1359939
(43) Date de publication de la demande: 24.08.2016
(73) Titulaire: Valeo Systèmes De Contrôle Moteur, 95800 Cergy Saint Christophe (FR)
(72) Inventeur: POUILLY, Aurélien, F-78700 Conflans Sainte Honorine (FR); TORCHEUX, Bertrand, F-78850 Thiverval Grignon (FR); MAYAVAN, Suriyaprakash, Vriddhachalam 606001 (IN)
(74) Mandataire: Novembre, Christophe Adelphe
(86) Numéro de dépôt international: PCT/FR2014/052226
(87) Numéro de publication internationale: WO 2015/055907

(56) Documents cités:
- DE-A1-102009 005 949
- US-A1- 2008 254 688

## Description

La présente invention concerne le domaine technique des connecteurs femelles destinés à a recevoir un connecteur male en forme de lame pour former un système de connexion électrique enfichable plusieurs fois.

Dans le domaine ci-dessus, il est connu de réaliser un connecteur femelle par poinçonnage d'un flan de métal de manière que le connecteur femelle est formé d'une lyre de connexion comprenant deux branches de contact en regard qui définissent une fente d'insertion de la lame de connexion et qui sont destinées à pincer la lame de connexion. Le connecteur femelle comprend en outre un pied de fixation à un circuit. Le connecteur femelle ainsi constitué est réalisé par poinçonnage d'un flan de métal.

Un tel connecteur femelle permet effectivement de raccorder d'une manière facilement démontable une lame de connexion selon une direction d'insertion parallèle aux branches du connecteur femelle. Cependant, un tel connecteur femelle présente l'inconvénient de ne pas offrir une qualité de contact entre le connecteur male et le connecteur femelle permettant le passage de courant de forte intensité sans risque de surchauffe dans la mesure où la surface de contact des branches est formée par la tranche du flan de métal, ce qui oblige à multiplier le nombre de lyres. De plus, en cas de défaut d'alignement entre la lyre et la lame qu'elle reçoit, la qualité du contact se trouve altérée de sorte que les risques d'échauffement sont augmentés.

Il est donc apparu le besoin d'un nouveau type de connecteur femelle qui offre une meilleure qualité de contact de manière à éviter les risques d'échauffement dangereux.

Afin d'atteindre cet objectif, l'invention concerne un connecteur femelle pour une lame de connexion dans la revendication 1. Ce connecteur tel que défini est réalisé à partir d'un flanc de métal et comprend :
- une lyre de connexion comprenant au moins deux branches de contact en regard qui définissent une fente d'insertion de la lame de connexion et qui sont destinées à pincer la lame de connexion,
- et au moins un pied de fixation à un circuit.

Dans le connecteur femelle selon l'invention, les deux branches de contact comprennent chacune une extrémité de contact arquée qui est raccordée par un segment de liaison droit à une âme cintrée en « U » ou « C » située à l'opposé et en regard de la fente d'insertion, ladite extrémité de contact présentant au moins une surface convexe orientée vers l'intérieur de la fente d'insertion, et en ce que chaque branche de contact a une largeur mesurée parallèlement à un plan médian de l'espace de réception, supérieure ou égale à l'épaisseur du flan de métal.

Un tel connecteur femelle, qui peut être réalisé par poinçonnage et pliage d'un flan de métal, permet d'offrir une bonne qualité de connexion en raison de la surface de contact offerte par les extrémités des branches de contact. De plus, la conformation en U de la lyre formée par pliage du flan parallèlement à ses grandes faces, soit perpendiculairement à ses tranches, permet d'obtenir une raideur importante et donc une pression de contact élevée de manière à réduire la résistance de contact, ce qui autorise le passage de courant élevé sans risque d'échauffement.

Selon l'invention, le pied de fixation est destiné à venir en appui sur un circuit, notamment pour y être fixé.

Selon l'invention, les deux branches de contact sont destinées à pincer la lame de connexion avec leurs extrémités de contact arquées. Le segment de liaison d'une branche de contact peut en outre former une branche de l'âme cintrée en forme de « U » ou « C ».

Selon l'invention, l'une des deux branches de contact, dite branche principale, porte latéralement au niveau du segment de liaison correspondant au moins un ensemble de fixation comprenant ledit pied de fixation.

Selon une variante de cette forme préférée de réalisation, chaque ensemble de fixation comprend un bras latéral situé dans le plan du segment de liaison et prolongé par une jambe qui s'étend parallèlement au segment de liaison et à l'opposé de l'extrémité de contact et qui porte, à l'opposé du bras latéral, le pied de fixation formé par pliage de l'extrémité libre de la jambe.

La mise en oeuvre d'un tel ensemble de fixation permet de conférer à la lyre de connexion une faculté de déplacement perpendiculairement à la direction d'extension de la fente d'insertion de manière à tenir compte des tolérances de positionnement de la lame de connexion.

Selon l'invention, la branche principale porte deux ensembles de fixation symétriques par rapport à l'âme et situés de part et d'autre du segment de liaison de la branche principale. Ces deux ensembles de fixation garantissent une stabilité du connecteur femelle notamment lors de l'insertion de la lame de connexion. De plus, ces deux ensembles de fixation augmentent la résistance mécanique de la fixation du connecteur au circuit, ainsi que la qualité du raccordement électrique du connecteur femelle au support conducteur qui le porte

Selon une autre variante de la forme de réalisation préférée, la jambe de l'ensemble de fixation présente une hauteur, mesurée entre une face de fixation du pied de fixation correspondant et un côté opposé du bras latéral, qui est supérieure ou égale à 30% de la hauteur totale du connecteur femelle mesurée entre la face de fixation du pied de fixation et le point de l'extrémité de contact qui est le plus éloigné de la face de fixation. En particulier, la face de fixation du pied correspond à la face du pied destinée à venir en contact avec le circuit.

Cette variante de ce mode de réalisation permet, lorsque le flan de métal utilisé présente une épaisseur constante, de conférer à chaque ensemble de fixation une raideur inférieure à la raideur de la lyre de connexion de sorte qu'en cas de défaut d'alignement de la lame avec la fente de réception, ce défaut d'alignement est compensé par la flexion de la ou des jambes des ensembles de fixation tandis que les extrémités de contact de la lyre sont en appui sur les deux faces de la lame.

Dans le même mode de réalisation préféré et selon encore une autre variante de la forme préférée de réalisation de l'invention, la jambe de l'ensemble de fixation possède une largeur ℓ', mesurée notamment parallèlement à un plan médian de la fente, qui est inférieure à la largeur ℓ des branches de contact.

Selon une variante de l'invention, l'extrémité de contact d'une première branche de contact est reliée au segment de liaison par un segment intermédiaire arqué de concavité inversée par rapport à l'extrémité de contact. En particulier, ledit segment intermédiaire permet de positionner l'extrémité de contact de la première branche en retrait d'un plan tangent à une face interne du segment de liaison de la première branche. Cette caractéristique permet d'assurer un ajustement de la position de la fente de réception par rapport à la première branche, notamment dans une direction sensiblement perpendiculaire à la direction d'extension de la fente.

Selon une variante de cette caractéristique, la surface de contact de l'extrémité de contact d'une seconde branche de contact est en partie au moins tangente à un plan tangent à une face interne du segment de liaison de la première branche de contact. La fente de réception est donc sensiblement centrée sur la fibre moyenne ou le plan médian du segment de liaison et des jambes. Ainsi, le plan médian de la fente de réception se trouve sensiblement aligné avec la ou les jambes des ensembles de fixation de sorte que les efforts résultant de l'insertion de la lame dans la fente de réception sont sensiblement alignés avec les jambes ce qui évite leur déformation ou flexion lors de ladite insertion.

Selon une variante de l'invention la branche de contact comprenant le segment intermédiaire arqué est la branche de contact principale.

Selon l'invention, chaque extrémité de contact est fendue et comprend au moins deux doigts de contact parallèles. L'espace délimitant les deux doigts de contact au niveau de chaque branche de la lyre s'étend parallèlement aux branches et définit les doigts de contact qui permettent d'optimiser la qualité de contact avec la lame en permettant un ajustement à la forme de cette dernière. L'espace séparant les deux doigts s'étend donc suivant une direction longitudinale de la branche de contact.

Selon l'invention, l'une des deux branches de contact, dite branche principale, porte latéralement au niveau du segment de liaison correspondant, deux ensembles de fixation comprenant chacun un pied de fixation, les deux ensembles de fixation étant symétriques par rapport à l'âme et situés de part et d'autre du segment de liaison de la branche principale.

Selon une variante de l'invention, chaque une branche de contact a une largeur mesurée parallèlement à un plan médian de la fente d'insertion, supérieure ou égale à l'épaisseur du flan de métal.

L'invention concerne également un boitier d'alimentation d'un moteur de direction assistée comprenant au moins un conducteur d'alimentation sur lequel est fixé au moins un connecteur femelle selon l'invention.

Par ailleurs, diverses autres caractéristiques de l'invention ressortent de la description annexée effectuée en référence aux dessins qui illustrent une forme non limitative de réalisation d'un connecteur femelle conforme à l'invention.
- La figure 1 est une perspective schématique d'un connecteur femelle selon l'invention.
- La figure 2 est une coupe longitudinale d'un connecteur femelle selon l'invention.
- La figure 3 est une élévation en vue de face du connecteur femelle illustré aux figures 1 et 2.
- La figure 4 est une élévation de côté d'un système de connexion mettant en oeuvre trois connecteurs femelles selon l'invention tels que le connecteur femelle illustré à la figure 1.

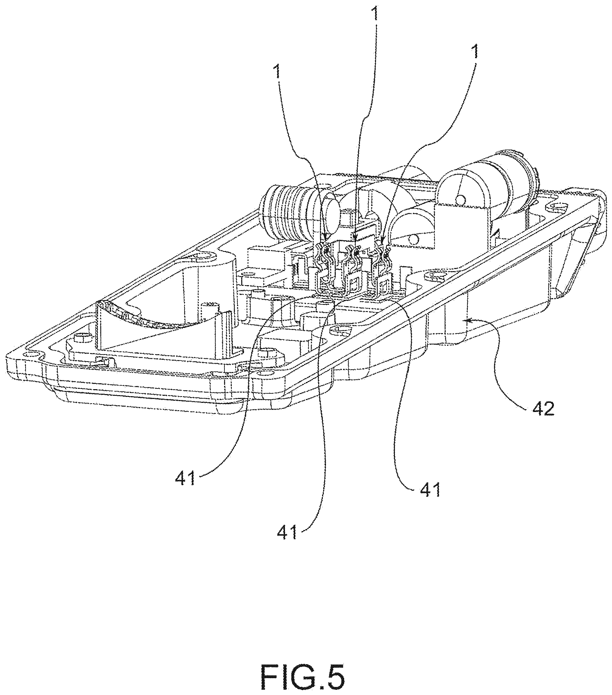

- La figure 5 est une perspective schématique d'un boitier d'alimentation comprenant trois connecteurs femelle selon l'invention.

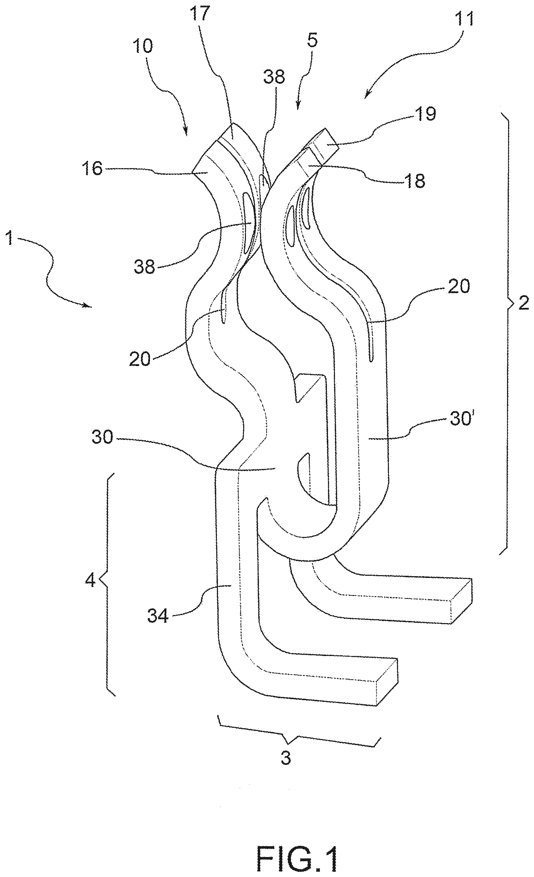

Un connecteur femelle selon l'invention, tel qu'illustré à la figure 1 en étant désigné par la référence 1, comprend trois régions fonctionnelles distinctes à savoir une lyre connexion 2, une région de fixation 3 sur un circuit électrique non représenté, et une région de flexion 4 qui assure la liaison entre la région de fixation 3 et la lyre de connexion 2. Cette décomposition en trois régions assurant chacune une unique fonction permet de garantir la qualité de la connexion avec une lame, non représentée, située dans une fente d'insertion définie par la lyre 2.

Le connecteur femelle 1 selon l'invention peut être formé par poinçonnage, emboutissage et pliage d'un flan de métal selon des techniques bien connues de l'homme du métier de sorte qu'il n'est pas nécessaire de les décrire ici en détail. Le connecteur femelle 1, selon l'invention, forme alors un ensemble monobloc. Le métal utilisé peut être de toute nature appropriée et notamment présenter des traitements de surface adaptés en fonction de la manière dont le connecteur est fixé sur le conducteur électrique correspondant.

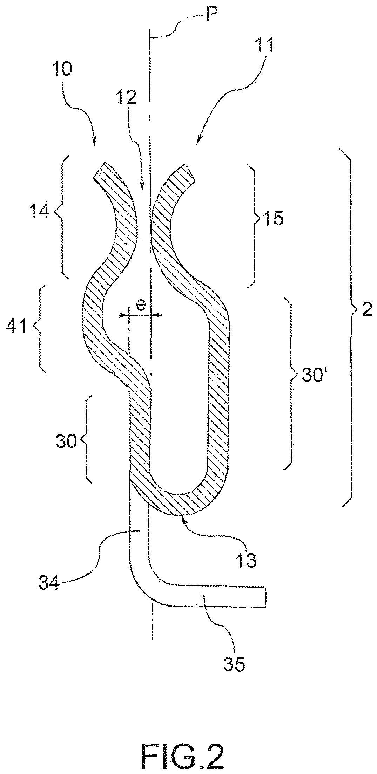

Comme le montre, notamment, la figure 2, la lyre de connexion 2 du connecteur femelle 1, comprend deux branches de contact 10 et 11 qui définissent une fente 12 d'insertion d'une lame de connexion non représentée. Les deux branches de contact 10 et 11 sont liées l'une à l'autre au niveau de leur base à l'opposé de la fente 12 par une âme en forme de « U » ou de « C ».

A l'opposé de l'âme 13, les deux branches de contact 10 et 11 comprennent chacune une extrémité de contact, respectivement 14 et 15. Chaque extrémité de contact 14 et 15 possède une forme arquée dont la concavité est orientée vers l'extérieur de la fente 12 de sorte que les extrémités de contact offrent une surface convexe vers l'intérieur de la fente d'insertion 12. La branche de contact 10, 11, en particulier l'extrémité de contact 14, 15, présente une largueur ℓ, mesurée parallèlement à un plan médian P de la fente d'insertion 12, supérieure à l'épaisseur e du flan de métal à partir duquel le connecteur femelle 1 est formé. Il doit être noté que les banches de contact 10 et 11 présentent la même largeur ℓ sur toute leur longueur qui correspond également dans le cas présent à la largeur de l'âme 13 .

Les extrémités de contact 14 et 15 sont chacune divisées en deux doigts de contact, respectivement 16, 17 et 18, 19, par une fente longitudinale 20 qui s'étend sur une partie seulement de la branche de contact correspondante.

Chaque branche de contact 10, 11 comprend, entre l'âme 13 et l'extrémité de contact correspondante, 14,15 un segment de liaison, respectivement 30, 30', droit ou rectiligne, en vue de côté, comme cela ressort de la figure 2. Le caractère rectiligne des segments de liaison 30 et 30' confère une forme générale en U à l'âme 13.

Le segment de liaison 30 de la première branche 10, dite également branche principale, porte deux ensembles de fixation 31, 32, symétriques l'un de l'autre par rapport à la dite branche principale 10. Chaque ensemble de fixation 31, 32 comprend un bras latéral 33 qui est situé dans le plan du segment de liaison 30. Le bras 33 porte, à l'opposé du segment de liaison 30, une jambe 34 qui s'étend parallèlement à la branche principale 10 en étant également coplanaire au segment de liaison 30. Chaque jambe 34 porte à l'opposé du bras latéral 33 et de l'extrémité de contact 14, un pied de fixation 35 formé par pliage de l'extrémité libre de ladite jambe 34. Le pied de fixation 35 est destiné à être fixé à un support conducteur de manière que sa face de fixation 36 soit en contact avec ledit support. La face de fixation réalise en particulier un contact électrique du pied avec ledit support.

Afin d'assurer une bonne flexibilité aux jambes 34, ces derniers possèdent une hauteur H' mesurée entre une hauteur, mesurée entre la face de fixation 36 du pied de fixation correspondant 35 et le côté opposé 37 du bras latéral 33, supérieure ou égale à 30% de la hauteur totale H du connecteur femelle 1 mesurée entre la face de fixation 36 du pied de fixation 35 et le point le plus éloigné des extrémités de contact 18,19.

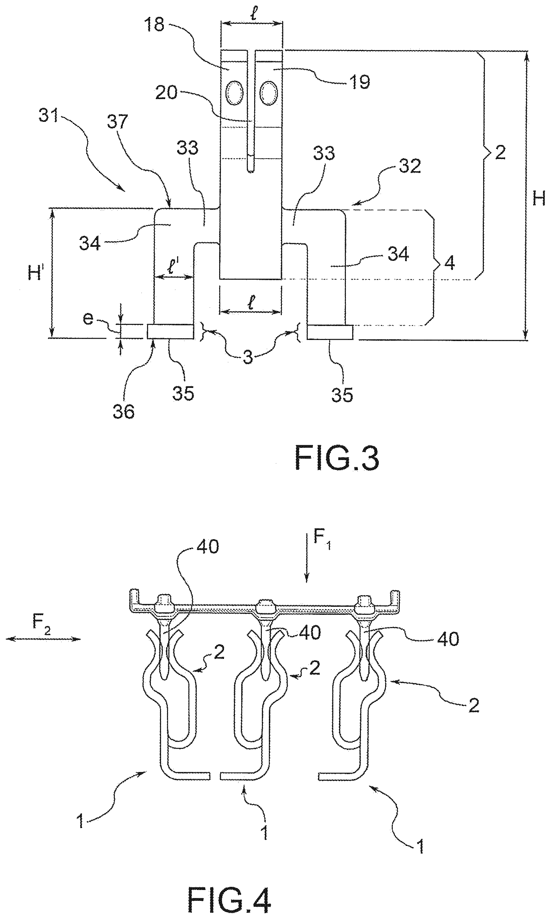

Ainsi, lors de l'engagement d'une lame de contact 40 dans la fente 12 dans le sens de la flèche F1, comme le montre la figure 4, la lyre de connexion 2 peut se déplacer, vers la gauche ou la droite à la figure 4 tel qu'indiqué par la double flèche F2, afin de s'adapter au défaut d'alignement éventuel de la lame 40. Cela est d'autant plus utile lorsque plusieurs connecteurs femelles 1 selon l'invention sont utilisés en parallèle.

De plus, afin de garantir qu'en cas de défaut d'alignement de la lame 40 avec la fente 12, ce défaut n'est pas compensé par l'écartement des branches de contact 10 et 11 mais par la flexion des jambes 34, chaque jambe 34 possède une largeur ℓ' inférieure à la largeur ℓ des branches de contact 10,11. Ainsi, la lyre de connexion 2 possède une raideur supérieure à la raideur de la région de flexion de sorte que les branches de contact 10, 11 maintiennent une bonne pression de contact sur la lame 40. De cette manière, l'effort de contact, donc la résistance électrique est garantie indépendamment du défaut d'alignement lyre 2/lame 40.

Par ailleurs, selon l'exemple illustré, afin de s'assurer que les efforts d'insertion de la lame s'exercent, autant que faire se peut, dans le plan des jambes 34, l'extrémité de contact 14 de la branche principale 10 est reliée au segment de liaison 30 par un segment intermédiaire 41 arqué de concavité inversée par rapport à l'extrémité de contact 14. En particulier, le segment intermédiaire 41 a une concavité de sorte que la surface de contact de l'extrémité de contact 14 de la branche principale 10 se trouve en retrait d'un plan P tangent à la face interne du segment de liaison 30. Selon l'exemple illustré, la face de contact de l'extrémité de contact 15 de l'autre branche 11 est sensiblement tangente au plan P. Ainsi, dans le connecteur, la fente 12 est sensiblement centrée sur la fibre moyenne ou le plan médian du segment de liaison 30 et des jambes 34.

Un tel connecteur femelle 1 peut alors être utilisé dans divers systèmes ou sous systèmes électriques ou électronique comme par exemple un boitier 42, tel que représenté à la figure 4, d'alimentation d'un moteur, appartenant notamment à un ensemble de direction assistée. Selon cet exemple de mise en oeuvre, chaque connecteur femelle 1 est soudé sur un conducteur d'alimentation ou une barre d'alimentation 41 intégrée au boitier d'alimentation. Ledit boîtier d'alimentation 42 peut alors être adapté sur un ensemble de direction assistée selon un mouvement de translation parallèle au plan médian de la fente d'insertion de manière que chaque connecteur femelle vient s'engager sur une lame de connexion, non représentée, portée par l'ensemble de direction assisté non représenté. Selon l'exemple illustré et de manière à assurer l'alimentation d'un moteur triphasé, le boitier 42 comprend trois barres d'alimentation 41 équipées chacune d'un connecteur femelle 1 conforme à l'invention.

Les extrémités de contact 10, 11, en particulier les doigts de contact 16, 17, 18, 19, peuvent comprendre un bossage 38 respectif. Le bossage 38 peut-être obtenu par déformation localisée de l'extrémité de contact 10, 11. Le bossage 38 définit un renflement vers l'intérieur de la fente de positionnement 12. Le bossage 38 permet ainsi un contact point-point entre la branche de contact 10, 11 et la lame 40 introduite dans la fente 12. Dans l'exemple illustré en figure 1, le connecteur permet deux fois deux points de contact. Le bossage 38 peut être réalisé par emboutissage.

## Revendications

1. Connecteur femelle pour une lame de connexion (40), connecteur qui est réalisé à partir d'un flanc de métal et qui comprend :
- une lyre de connexion (2) comprenant au moins deux branches de contact (10,11) en regard qui définissent une fente (12) d'insertion de la lame de connexion et qui sont destinées à pincer la lame de connexion,
- et au moins un pied de fixation (35) destiné à venir en appui sur un circuit pour y être fixé,
les deux branches de contact (10,11) comprenant chacune une extrémité de contact (14,15) arquée qui est raccordée par un segment de liaison (30,30') droit à une âme cintrée en « U » ou « C » située à l'opposé et en regard de la fente d'insertion (12), ladite extrémité de contact (14,15) présentant au moins une surface convexe orientée vers l'intérieur de la fente d'insertion (12), et en ce que l'une des deux branches de contact (10), dite branche principale (10), porte latéralement au niveau du segment de liaison (30) correspondant, deux ensembles de fixation (31,32) comprenant chacun un pied de fixation (35), les deux ensembles de fixation (31,32) étant symétriques par rapport à l'âme (13) et situés de part et d'autre du segment de liaison (30) de la branche principale (10), **caractérisé en ce que** chaque extrémité de contact (14,15) est fendue et comprend au moins deux doigts de contact (16, 17, 18, 19) parallèles.

2. Connecteur femelle selon la revendication précédente, **caractérisé en ce que** chaque branche de contact (10,11) a une largeur (ℓ) mesurée parallèlement à un plan médian de la fente d'insertion, supérieure ou égale à l'épaisseur (e) du flan de métal.

3. Connecteur femelle selon les revendications 1 ou 2, **caractérisé en ce que** chaque ensemble de fixation (31, 32) comprend un bras latéral (33) situé dans le plan du segment de liaison (30) et prolongé par une jambe (34) qui s'étend parallèlement au segment de liaison (30) et à l'opposé de l'extrémité de contact (14) et qui porte, à l'opposé du bras latéral (33), le pied de fixation (35) formé par pliage de l'extrémité libre de la jambe (34).

4. Connecteur femelle selon la revendication 3, **caractérisé en ce que** la jambe (34) de l'ensemble de fixation (31,32) présente une hauteur (H'), mesurée entre une face de fixation (36) du pied de fixation (35) correspondant et un côté opposé du bras latéral (33), qui est supérieure ou égale à 30% de la hauteur totale du connecteur femelle mesurée entre la face de fixation (36) du pied de fixation (35) et le point de l'extrémité de contact (14) qui est le plus éloigné de la face de fixation (36).

5. Connecteur selon les revendications 3 ou 4, **caractérisé en ce que** la jambe (34) de l'ensemble de fixation (31,32) possède une largeur (ℓ') inférieure à la largeur (ℓ) des branches de contact (10, 11).

6. Connecteur femelle selon l'une des revendications précédentes, **caractérisé en ce que** l'extrémité de contact (14) d'une première branche de contact (10) est reliée au segment de liaison (30) par un segment intermédiaire (41) arqué de concavité inversée par rapport à l'extrémité de contact (14).

7. Connecteur femelle selon la revendication précédente **caractérisé en ce que** la surface de contact de l'extrémité de contact (15) d'une seconde branche de contact (11) est en partie au moins tangente à un plan (P) tangent à une face interne du segment de liaison (30) de la première branche de contact (10).

8. Connecteur femelle selon les revendications 6 ou 7, **caractérisé en ce que** la branche de contact comprenant le segment intermédiaire arqué (41) est la branche principale (10).

9. Boitier d'alimentation d'un moteur de direction assistée comprenant au moins un conducteur d'alimentation (41) sur lequel est fixé au moins un connecteur femelle (1) selon l'une des revendications précédentes.

## Patentansprüche

1. Buchsenverbinder für eine Verbindungslamelle (40), Verbinder, der ausgehend von einem Metallzuschnitt hergestellt wird und der enthält:
- eine Verbindungsgabel (2), die mindestens zwei einander gegenüberliegende Kontaktzweige (10, 11) enthält, die einen Schlitz (12) zum Einführen der Verbindungslamelle definieren und die dazu bestimmt sind, die Verbindungslamelle einzuklemmen,
- und mindestens einen Befestigungsfuß (35), der dazu bestimmt ist, auf einer Schaltung in Auflage zu kommen, um dort befestigt zu werden,
die zwei Kontaktzweige (10, 11) enthaltend je ein gebogenes Kontaktende (14, 15), das durch ein gerades Verbindungssegment (30, 30') an einen "U"- oder "C"-förmig gebogenen Steg angeschlossen ist, der sich entgegengesetzt zu und gegenüber dem Einführschlitz (12) befindet, wobei das Kontaktende (14, 15) mindestens eine konvexe Fläche aufweist, die zum Inneren des Einführschlitzes (12) gerichtet ist, und dass einer der zwei Kontaktzweige (10), Hauptzweig (10) genannt, seitlich im Bereich des entsprechenden Verbindungssegments (30) zwei Befestigungseinheiten (31, 32) trägt, die je einen Befestigungsfuß (35) enthalten, wobei die zwei Befestigungseinheiten (31, 32) bezüglich des Stegs (13) symmetrisch sind und sich zu beiden Seiten des Verbindungssegments (30) des Hauptzweigs (10) befinden, **dadurch gekennzeichnet, dass** jedes Kontaktende (14, 15) geschlitzt ist und mindestens zwei parallele Kontaktfinger (16, 17, 18, 19) enthält.

2. Buchsenverbinder nach dem vorhergehenden Anspruch, **dadurch gekennzeichnet, dass** jeder Kontaktzweig (10, 11) eine Breite (ℓ) gemessen parallel zu einer Mittelebene des Einführschlitzes größer als die oder gleich der Dicke (e) des Metallzuschnitts hat.

3. Buchsenverbinder nach den Ansprüchen 1 oder 2, **dadurch gekennzeichnet, dass** jede Befestigungseinheit (31, 32) einen Seitenarm (33) enthält, der sich in der Ebene des Verbindungssegments (30) befindet und von einem Bein (34) verlängert wird, das sich parallel zum Verbindungssegment (30) und entgegengesetzt zum Kontaktende (14) erstreckt und das entgegengesetzt zum Seitenarm (33) den Befestigungsfuß (35) trägt, der durch Umbiegen des freien Endes des Beins (34) gebildet wird.

4. Buchsenverbinder nach Anspruch 3, **dadurch gekennzeichnet, dass** das Bein (34) der Befestigungseinheit (31, 32) eine Höhe (H') gemessen zwischen einer Befestigungsseite (36) des entsprechenden Befestigungsfußes (35) und einer entgegengesetzten Seite des Seitenarms (33) hat, die größer als oder gleich 30% der Gesamthöhe des Buchsenverbinders gemessen zwischen der Befestigungsseite (36) des Befestigungsfußes (35) und dem Punkt des Kontaktendes (14) ist, der am weitesten von der Befestigungsseite (36) entfernt ist.

5. Verbinder nach den Ansprüchen 3 oder 4, **dadurch gekennzeichnet, dass** das Bein (34) der Befestigungseinheit (31, 32) eine geringere Breite (ℓ') als die Breite (ℓ) der Kontaktzweige (10, 11) besitzt.

6. Buchsenverbinder nach einem der vorhergehenden Ansprüche, **dadurch gekennzeichnet, dass** das Kontaktende (14) eines ersten Kontaktzweigs (10) mit dem Verbindungssegment (30) über ein gebogenes Zwischensegment (41) mit einer umgekehrten Konkavität bezüglich des Kontaktendes (14) verbunden ist.

7. Buchsenverbinder nach dem vorhergehenden Anspruch, **dadurch gekennzeichnet, dass** die Kontaktfläche des Kontaktendes (15) eines zweiten Kontaktzweigs (11) zum Teil zumindest eine Ebene (P) tangiert, die eine Innenseite des Verbindungssegments (30) des ersten Kontaktzweigs (10) tangiert.

8. Buchsenverbinder nach den Ansprüchen 6 oder 7, **dadurch gekennzeichnet, dass** der das gebogene Zwischensegment (41) enthaltende Kontaktzweig der Hauptzweig (10) ist.

9. Versorgungseinheit eines Servolenkung-Motors, die mindestens einen Versorgungsleiter (41) enthält, an dem mindestens ein Buchsenverbinder (1) nach einem der vorhergehenden Ansprüche befestigt ist.

## Claims

1. Female connector for a connecting blade (40), which connector is produced from a metal blank and comprises:
- a connecting bow (2) comprising at least two contact branches (10, 11) facing one another which define a slot (12) for insertion of the connecting blade and which are intended to clamp the connecting blade,
- and at least one fixing foot (35) intended to rest against a circuit in order to be fixed thereto,
the two contact branches (10, 11) each comprising a bowed contact end (14, 15) which is connected by a straight joining segment (30, 30') to a curved "U"-shaped or "C"-shaped web situated at the opposite end and facing the insertion slot (12), said contact end (14, 15) having at least one convex surface oriented towards the inside of the insertion slot (12), and in that one of the two contact branches (10), referred to as the main branch (10), laterally in the region of the corresponding joining segment (30), bears two fixing assemblies (31, 32) each comprising a fixing foot (35), the two fixing assemblies (31, 32) being symmetrical with respect to the web (13) and situated one on either side of the joining segment (30) of the main branch (10), **characterized in that** each contact end (14, 15) is slotted and comprises at least two parallel contact fingers (16, 17, 18, 19).

2. Female connector according to the preceding claim, **characterized in that** each contact branch (10, 11) has a width (ℓ), measured parallel to a median plane of the insertion slot, greater than or equal to the thickness (e) of the metal blank.

3. Female connector according to Claims 1 or 2, **characterized in that** each fixing assembly (31, 32) comprises a lateral arm (33) situated in the plane of the joining segment (30) and extended by a leg (34), which extends parallel to the joining segment (30) and at the end opposite the contact end (14) and which bears, at the end opposite the lateral arm (33), the fixing foot (35) formed by bending the free end of the leg (34).

4. Female connector according to Claim 3, **characterized in that** the leg (34) of the fixing assembly (31, 32) has a height (H'), measured between a fixing face (36) of the corresponding fixing foot (35) and a side opposite the lateral arm (33), which is greater than or equal to 30% of the total height of the female connector measured between the fixing face (36) of the fixing foot (35) and the point of the contact end (14) distanced furthest from the fixing face (36).

5. Connector according to Claims 3 or 4, **characterized in that** the leg (34) of the fixing assembly (31, 32) has a width (ℓ') less than the width (ℓ) of the contact branches (10, 11).

6. Female connector according to one of the preceding claims, **characterized in that** the contact end (14) of a first contact branch (10) is connected to the joining segment (30) by a bowed intermediate segment (41) of reverse concavity compared with the contact end (14).

7. Female connector according to the preceding claim, **characterized in that** the contact surface of the contact end (15) of a second contact branch (11) is in part at least tangent to a plane (P) tangent to an inner face of the joining segment (30) of the first contact branch (10) .

8. Female connector according to Claims 6 or 7, **characterized in that** the contact branch comprising the bowed intermediate segment (41) is the main branch (10).

9. Unit for supplying power to a power-steering motor comprising at least one supply conductor (41), on which there is fixed at least one female connector (1) according to one of the preceding claims.
